# FASCICULE DE BREVET EUROPEEN

(11) **EP 2 337 931 B1**
(45) Date de publication et mention de la délivrance du brevet: **03.09.2014**
(21) Numéro de dépôt: 09741404.9
(22) Date de dépôt: 11.09.2009
(51) Int. Cl.: F01D 25/12, F01D 25/16, F01D 25/18, F02C 7/06

(54) **PROCEDE ET SYSTEME DE LUBRIFICATION D'UNE TURBOMACHINE**
VERFAHREN UND SYSTEM ZUR SCHMIERUNG EINES TURBOMOTORS
METHOD AND SYSTEM FOR LUBRICATING A TURBINE ENGINE

(30) Priorité: 22.09.2008 FR 0856340
(43) Date de publication de la demande: 29.06.2011
(73) Titulaire: Snecma, 75015 Paris (FR)
(72) Inventeur: CHARIER, Gilles, Alain, F-77130 La Grande Paroisse (FR); GAUTHIER, Gérard, Philippe, F-77430 Champagne Sur Seine (FR); GILLE, Laurent, F-77190 Dammarie Les Lys (FR); MORREALE, Serge, René, F-77390 Guignes (FR)
(74) Mandataire: Boura, Olivier
(86) Numéro de dépôt international: PCT/FR2009/051713
(87) Numéro de publication internationale: WO 2010/031948

(56) Documents cités:
- FR-A- 1 540 003
- FR-A- 2 491 141
- GB-A- 1 301 282
- US-A- 3 527 054
- US-A- 3 722 624
- US-A- 4 525 995
- US-A1- 2001 047 651

## Description

### Arrière-plan de l'invention

La présente invention se rapporte au domaine général de la lubrification dynamique d'une turbomachine aéronautique.

Une turbomachine aéronautique comporte de nombreux éléments nécessitant d'être lubrifiés ; il s'agit notamment des paliers à roulement utilisés pour supporter les arbres en rotation, ainsi que les engrenages du boîtier d'entraînement d'accessoires.

En particulier, pour diminuer le frottement, l'usure et l'échauffement dus à la vitesse de rotation élevée des arbres de la turbomachine, les paliers à roulement qui les supportent ont besoin d'être lubrifiés. Comme une simple lubrification en injectant de l'huile uniquement lors des phases d'entretien de la turbomachine ne suffit pas, on a généralement recours à une lubrification dite dynamique.

Une lubrification dynamique consiste à mettre de l'huile en circulation continue dans un circuit de lubrification. Un débit d'huile de lubrification provenant d'un réservoir est ainsi envoyé par une pompe sur les roulements des paliers, ces derniers étant logés dans des enceintes fermées par des joints d'étanchéité. Pour éviter toute fuite d'huile de lubrification des enceintes vers le reste de la turbomachine au travers des joints d'étanchéité, un débit d'air qui est prélevé sur l'un des compresseurs de la turbomachine est injecté au travers de ces joints. Les enceintes se trouvent ainsi pressurisées par rapport à la pression atmosphérique.

L'essentiel de l'air introduit dans les enceintes est alors évacué vers l'extérieur de la turbomachine en empruntant un circuit spécial destiné à le déshuiler et à contrôler la pression à l'intérieur des enceintes. Quant à l'huile de lubrification injectée dans les enceintes, elle est récupérée en fond d'enceinte par des pompes de récupération via un autre circuit spécial. Pour assurer un assèchement complet de l'enceinte, une faible part d'air est également aspirée par ces pompes et le mélange air/huile ainsi récupéré doit être séparé avant de renvoyer l'huile désaérée au réservoir.

Un tel procédé de lubrification présente un certain nombre d'inconvénients. En particulier, l'huile de lubrification doit être acheminée par de multiples aménagements : canalisations, gicleurs, écopes centrifuges, écopes centripètes, lunules, canaux, etc. L'évacuation de l'huile et de l'air chargé de gouttelettes d'huile requiert également l'utilisation de pompes de récupération et d'un déshuileur qui alourdissent la turbomachine.

Ces inconvénients sont assumés dès lors que la puissance thermique générée par les roulements des paliers de la turbomachine est suffisamment élevée pour justifier le recours à un tel système de lubrification. C'est le cas notamment des turbomachines dans lesquelles la vitesse de rotation des roulements est importante à haut régime (par exemple de l'ordre de 6000 à 8000 tours/min pour l'arbre basse-pression et de l'ordre de 14000 à 20000 tours/min pour l'arbre haute-pression d'une turbomachine à double corps).

En revanche, lorsque les roulements de l'un des paliers à roulement de la turbomachine tournent à une vitesse relativement faible (par exemple de l'ordre de 1000 tours/min), la puissance générée par les roulements de ce palier est trop faible pour justifier le recours à un tel système de lubrification. Dans une telle situation, il en résulte qu'un débit d'huile de lubrification surabondant est injecté dans l'enceinte renfermant ce palier à roulement à faible vitesse de rotation, avec le risque de fuites d'huile hors de l'enceinte que cela comporte.

FR-A-2 491 141 décrit un procédé et un système de lubrification de deux enceintes d'une turbomachine renfermant chacune un palier à roulement.

### Objet et résumé de l'invention

La présente invention a donc pour but principal de pallier de tels inconvénients en proposant un procédé et un système de lubrification d'une turbomachine comportant au moins trois enceintes distinctes renfermant chacune au moins un palier à roulement qui permet de lubrifier efficacement les paliers à roulement sans avoir recours à des aménagements compliqués.

Conformément à l'invention, ce but est atteint grâce à un procédé consistant à :
pressuriser les enceintes par injection dans celles-ci d'un débit d'air comprimé au travers de joints d'étanchéité fermant lesdites enceintes, deux des enceintes dites enceintes principales étant pressurisées à une pression supérieure à l'enceinte restante dite enceinte secondaire ;
lubrifier le palier à roulement des enceintes principales par injection dans celles-ci d'un débit d'huile provenant d'un réservoir d'huile de la turbomachine ;
lubrifier le palier à roulement de l'enceinte secondaire uniquement par injection d'un brouillard d'huile provenant de l'une au moins des enceintes principales, ledit brouillard d'huile étant acheminé par différence de pressions entre les enceintes principales et l'enceinte secondaire ;
récupérer le restant de l'huile de lubrification injectée dans les enceintes principales pour l'acheminer vers le réservoir d'huile ; et
acheminer le mélange air/huile provenant de l'enceinte secondaire vers un déshuileur afin de séparer l'air de l'huile.

Par brouillard d'huile, on entend un flux d'air chargé de gouttelettes d'huile en suspension. Lorsque les roulements du palier de l'enceinte secondaire ont une vitesse de rotation relativement faible par rapport aux paliers des enceintes principales (par exemple de l'ordre de 1000 tours/min), l'utilisation d'un brouillard d'huile provenant de l'une au moins des enceintes principales suffit amplement à assurer une parfaite lubrification de ces roulements. Il en résulte une simplification et un allègement du système de lubrification (suppression d'un gicleur d'huile, d'une pompe de récupération, d'une canalisation de dégazage et de déshuileurs).

Différentes variantes de réalisation d'un tel procédé sont possibles.

Selon un premier mode de réalisation, le palier à roulement de l'enceinte secondaire est lubrifié par injection d'un brouillard d'huile provenant des deux enceintes principales.

Selon un second mode de réalisation, le palier à roulement de l'enceinte secondaire est lubrifié par injection d'un brouillard d'huile provenant uniquement de l'une des deux enceintes principales.

L'invention a également pour objet un système de lubrification d'une turbomachine, comportant :
au moins trois enceintes distinctes renfermant chacune au moins un palier à roulement et fermées chacune par des joints d'étanchéité ;
des moyens pour introduire un débit d'air comprimé dans les enceintes au travers des joints d'étanchéité pour les pressuriser, deux des enceintes dites enceintes principales étant pressurisées à une pression supérieure à l'enceinte restante dite enceinte secondaire ;
des moyens pour injecter sur le palier à roulement des enceintes principales un débit d'huile provenant d'un réservoir d'huile de la turbomachine ;
un conduit d'injection reliant au moins l'une des enceintes principales à l'enceinte secondaire afin d'injecter sur le palier à roulement de l'enceinte secondaire un brouillard d'huile provenant de l'une au moins des enceintes principales ;
des moyens pour récupérer depuis une sortie basse des enceintes principales le restant de l'huile de lubrification injectée dans celles-ci et pour l'acheminer vers le réservoir d'huile ; et
des moyens pour acheminer le mélange air/huile provenant d'une sortie basse de l'enceinte secondaire vers un déshuileur.

L'invention a encore pour objet une turbomachine comportant un système de lubrification tel que décrit précédemment.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures :
- la figure 1 est une vue schématique d'un système de lubrification selon un premier mode de réalisation de l'invention ; et
- la figure 2 est une vue schématique d'un système de lubrification selon un second mode de réalisation de l'invention.

### Description détaillée d'un mode de réalisation

L'invention s'applique à toute turbomachine aéronautique comportant au moins trois enceintes renfermant des paliers à roulement. Elle s'applique plus particulièrement aux turbomachines à soufflante contrarotative à deux étages.

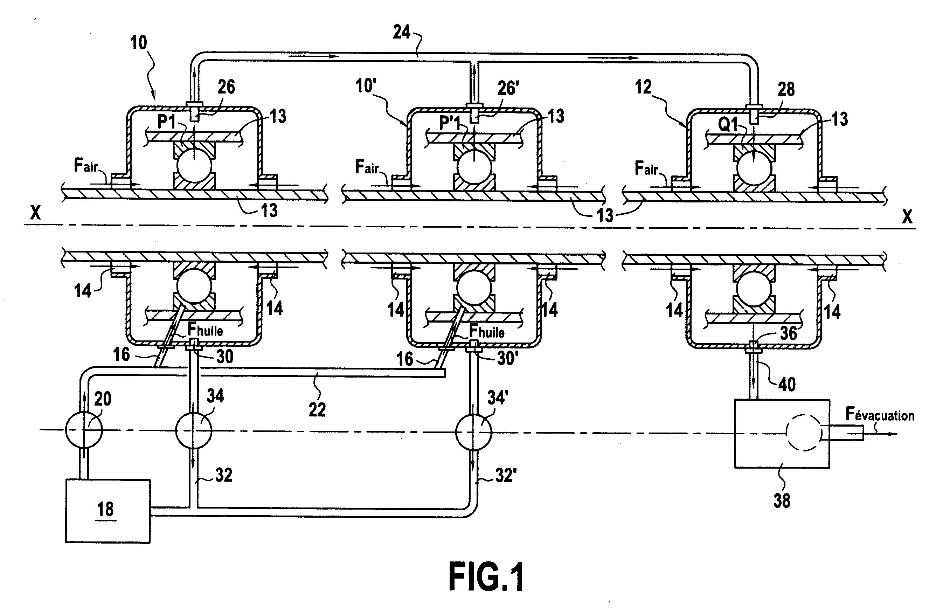

La figure 1 représente de façon très schématique un système de lubrification appliqué à une turbomachine à soufflante contrarotative à deux étages.

Cette turbomachine d'axe longitudinal X-X comporte trois enceintes annulaires distinctes, à savoir : deux enceintes dites principales 10, 10' formées en amont de la turbomachine et renfermant chacune au moins un palier à roulement, respectivement P1 et P'1, et une enceinte dite secondaire 12 formée en aval et renfermant au moins un palier à roulement Q1. Par commodité, un seul palier par enceinte est représenté sur la figure 1. Bien entendu, chaque enceinte pourrait en comporter plusieurs.

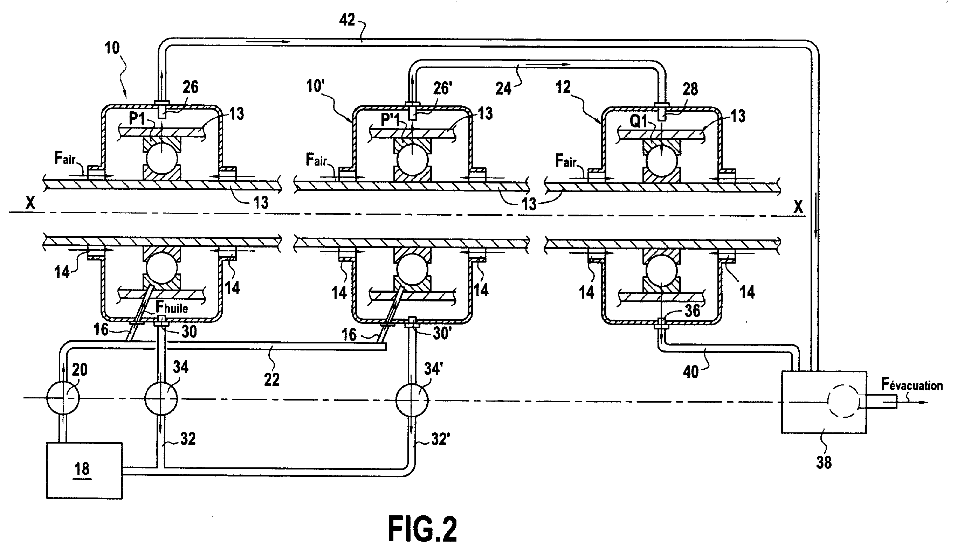

De façon bien connue en soi, ces différents paliers à roulement (qui peuvent être à billes ou à rouleaux) supportent en rotation les différents corps de la turbomachine afin de tenir aux charges radiales et axiales de la turbomachine. Sur les figures 1 et 2, la référence 13 désigne des portions d'arbres des corps de la turbomachine ou des portions de carter sur lesquelles les bagues des paliers à roulement sont montées.

Par ailleurs, compte tenu des régimes de rotation des arbres de la turbomachine, les roulements du palier Q1 de l'enceinte secondaire 12 tournent à une vitesse relativement faible (par exemple de l'ordre de 1000 à 2000 tours/min) par rapport aux roulements des paliers P1, P'1 des enceintes principales 10, 10' (tournant par exemple à une vitesse de l'ordre de 6000 à 20000 tours/min).

Les enceintes principales 10, 10' et secondaire 12 sont distinctes les unes des autres et sont chacune hermétiquement fermées à leurs extrémités amont et aval par des joints d'étanchéité annulaires 14. Ces joints d'étanchéité sont par exemple des joints labyrinthe, des joints à brosse ou des joints à bague carbone.

Pour diminuer le frottement, l'usure et l'échauffement qui sont notamment dus à la vitesse de rotation élevée des arbres de la turbomachine, les paliers à roulement des enceintes principales et secondaire ont besoin d'être lubrifiés. Cette lubrification est assurée grâce à un procédé et un système détaillés ci-après.

Les paliers à roulement P1, P'1 des enceintes principales 10, 10' sont lubrifiés en injectant de l'huile en continu entre les bagues de leurs roulements. Cette injection est réalisée par l'intermédiaire de buses d'injection 16 débouchant au regard de ces bagues. Sur la figure 1, cette injection d'huile de lubrification est schématisée par les flèches Fₕᵤᵢₗₑ.

L'huile utilisée pour lubrifier ces paliers à roulement P1, P'1 provient d'un réservoir d'huile 18 de la turbomachine. L'huile est prélevée dans ce réservoir 18 au moyen d'une pompe d'alimentation en huile 20 et alimente un circuit d'huile 22 relié à chaque buse d'injection 16.

Un débit d'air comprimé est également introduit dans les enceintes principales 10, 10' et secondaire 12 au travers de leurs joints d'étanchéité respectifs 14. Ce débit d'air qui provient par exemple d'un prélèvement sur le compresseur haute-pression de la turbomachine est schématisé par les flèches Fₐᵢᵣ sur la figure 1. Il permet de pressuriser ces enceintes afin d'éviter que de l'huile de lubrification ne s'échappe hors de celles-ci.

Par ailleurs, conformément à l'invention, les enceintes principales 10, 10' sont plus fortement pressurisées que l'enceinte secondaire 12, c'est-à-dire que la pression régnant à l'intérieur de chacune des enceintes principales est supérieure à celle régnant dans l'enceinte secondaire. Ceci est rendu possible en introduisant un débit d'air comprimé plus important dans les enceintes principales que dans l'enceinte secondaire.

Le palier à roulement Q1 de l'enceinte secondaire 12 est quant à lui lubrifié par injection d'un brouillard d'huile provenant de chacune des enceintes principales 10, 10'. Ce brouillard d'huile est acheminé au moyen d'au moins un conduit d'injection 24 reliant en partie supérieure des premières sorties 26, 26' (appelées sorties hautes) des enceintes principales à une entrée 28 de l'enceinte secondaire, cette entrée débouchant au regard du palier Q1 de celle-ci. Compte tenu de la différence de pression existant entre les enceintes principales et l'enceinte secondaire, aucune pompe n'est nécessaire pour faire circuler ce brouillard d'huile des enceintes principales vers l'enceinte secondaire.

Le brouillard d'huile est un flux d'air chargé de gouttelettes d'huile en suspension, ces gouttelettes d'huile étant issues de la lubrification des roulements des paliers P1, P'1 des enceintes principales. Comme les roulements du palier Q1 de l'enceinte secondaire tournent à une vitesse relativement faible par rapport aux autres roulements, leur lubrification peut être assurée par l'unique injection de ce brouillard d'huile. Aussi, aucune injection d'huile par l'intermédiaire d'une buse d'injection (ou tout autre dispositif équivalent) n'est prévue pour lubrifier ce palier Q1.

Chaque enceinte principale 10, 10' comporte également en partie inférieure une seconde sortie 30, 30' (appelée sortie basse) spécifique permettant de récupérer le restant de l'huile de lubrification injectée dans ces enceintes. A cet effet, ces sorties basses 30, 30' débouchent chacune dans un conduit d'évacuation 32, 32' relié au réservoir d'huile 18 de la turbomachine (par l'intermédiaire de séparateurs air/huile non représentés sur la figure 1). Des pompes d'évacuation 34, 34' permettent d'acheminer le restant de l'huile de lubrification vers le réservoir d'huile 18.

Quant à l'enceinte secondaire 12, elle comporte également en partie inférieure une sortie basse 36 spécifique permettant de récupérer le mélange air/huile provenant de la lubrification du palier Q1 pour l'acheminer vers un déshuileur 38. A cet effet, la sortie basse 36 est reliée au déshuileur 38 au moyen d'un conduit d'évacuation 40. Le déshuileur sépare l'air de l'huile, l'huile étant renvoyée vers le réservoir d'huile 18 de la turbomachine (renvoi non représenté sur la figure 1) et l'air étant évacué à l'extérieur de celle-ci (évacuation représentée par la flèche Févacuation sur la figure 1).

En liaison avec la figure 2, on décrira un second mode de réalisation du procédé et du système de lubrification selon l'invention. Dans ce mode de réalisation, la turbomachine comporte également deux enceintes principales 10, 10' et une enceinte secondaire 12.

En revanche, ce second mode de réalisation se distingue du premier mode de réalisation en ce que le conduit d'injection 24 relie uniquement l'une des enceintes principales (à savoir ici l'enceinte principale 10') à l'enceinte secondaire 12. Ainsi, le palier à roulement Q1 de l'enceinte secondaire 12 est lubrifié uniquement par injection d'un brouillard d'huile provenant seulement de l'une des deux enceintes principales.

Bien entendu, le conduit d'injection pourrait tout aussi bien relier l'autre enceinte principale (à savoir l'enceinte 10) à l'enceinte secondaire 12. Comme pour l'autre mode de réalisation, aucune injection d'huile par l'intermédiaire d'une buse d'injection (ou tout autre dispositif équivalent) n'est prévue pour lubrifier le palier à roulement Q1 de l'enceinte secondaire.

La première sortie 26 en partie supérieure de l'enceinte principale 10 non reliée à l'enceinte secondaire 12 est reliée au déshuileur 38 au moyen d'un conduit 42 afin de séparer l'air de l'huile du brouillard air/huile issu de cette enceinte principale.

Enfin, il est à noter que la pompe d'alimentation en huile 20, les pompes d'évacuation 34 et le déshuileur 38 de ces deux modes de réalisation peuvent être couplés au boîtier d'entraînement d'accessoires de la turbomachine (non représenté) pour être entraînés par celui-ci. Alternativement, certains ou l'ensemble de ces accessoires pourraient être électriques.

## Revendications

1. Procédé de lubrification d'une turbomachine comportant au moins trois enceintes (10, 10', 12) distinctes renfermant chacune au moins un palier à roulement (P1, P'1, Q1), **caractérisé en ce qu'**il consiste à :
pressuriser les enceintes par injection dans celles-ci d'un débit d'air comprimé au travers de joints d'étanchéité (14) fermant lesdites enceintes, deux des enceintes dites enceintes principales (10, 10') étant pressurisées à une pression supérieure à l'enceinte restante dite enceinte secondaire (12) ;
lubrifier le palier à roulement (P1, P'1) des enceintes principales par injection dans celles-ci d'un débit d'huile provenant d'un réservoir d'huile (18) de la turbomachine ;
lubrifier le palier à roulement (Q1) de l'enceinte secondaire uniquement par injection d'un brouillard d'huile provenant de l'une au moins des enceintes principales, ledit brouillard d'huile étant acheminé par différence de pressions entre les enceintes principales et l'enceinte secondaire ;
récupérer le restant de l'huile de lubrification injectée dans les enceintes principales pour l'acheminer vers le réservoir d'huile ; et
acheminer le mélange air/huile provenant de l'enceinte secondaire vers un déshuileur (38) afin de séparer l'air de l'huile.

2. Procédé selon la revendication 1, dans lequel le palier à roulement (Q1) de l'enceinte secondaire (12) est lubrifié par injection d'un brouillard d'huile provenant des deux enceintes principales (10, 10').

3. Procédé selon la revendication 1, dans lequel le palier à roulement (Q1) de l'enceinte secondaire (12) est lubrifié par injection d'un brouillard d'huile provenant uniquement de l'une des deux enceintes principales (10, 10').

4. Système de lubrification d'une turbomachine, comportant :
au moins trois enceintes (10, 10', 12) distinctes renfermant chacune au moins un palier à roulement (P1, P'1, Q1) et fermées chacune par des joints d'étanchéité (14) ;
des moyens pour introduire un débit d'air comprimé dans les enceintes au travers des joints d'étanchéité pour les pressuriser, deux des enceintes dites enceintes principales (10, 10') étant pressurisées à une pression supérieure à l'enceinte restante dite enceinte secondaire (12) ;
des moyens (16) pour injecter sur le palier à roulement (P1, P'1) des enceintes principales un débit d'huile provenant d'un réservoir d'huile (18) de la turbomachine ;
un conduit d'injection (24) reliant au moins l'une des enceintes principales à l'enceinte secondaire afin d'injecter sur le palier à roulement de l'enceinte secondaire un brouillard d'huile provenant de l'une au moins des enceintes principales ;
des moyens (32, 32', 34, 34') pour récupérer depuis une sortie basse (30, 30') des enceintes principales le restant de l'huile de lubrification injectée dans celles-ci et pour l'acheminer vers le réservoir d'huile ; et
des moyens (40) pour acheminer le mélange air/huile provenant d'une sortie basse (36) de l'enceinte secondaire vers un déshuileur (38).

5. Système selon la revendication 4, dans lequel le conduit d'injection (24) relie les deux enceintes principales (10, 10') à l'enceinte secondaire (12) afin d'injecter sur le palier à roulement (Q1) de l'enceinte secondaire un brouillard d'huile provenant des deux enceintes principales.

6. Système selon la revendication 4, dans lequel le conduit d'injection (24) relie uniquement l'une des deux enceintes principales (10') à l'enceinte secondaire afin d'injecter sur le palier à roulement de l'enceinte secondaire un brouillard d'huile provenant uniquement de cette enceinte principale, l'autre enceinte principale (10) étant reliée au déshuileur (38) par un conduit (42).

7. Turbomachine comportant un système de lubrification selon l'une quelconque des revendications 4 à 6.

## Patentansprüche

1. Verfahren zur Schmierung einer Turbomaschine mit wenigstens drei getrennten Kammern (10, 10', 12), die jeweils wenigstens ein Wälzlager (P1, P'1, Q1) enthalten, **dadurch gekennzeichnet, dass** es darin besteht:
die Kammern dadurch mit Druck zu beaufschlagen, dass in diese eine Druckluftmenge durch die Kammern verschließende Dichtungen (14) eingeleitet wird, wobei zwei der Kammern, sogenannte Hauptkammern (10, 10') mit einem höheren Druck als die verbleibende Kammer, sogenannte Sekundärkammer (12) beaufschlagt werden;
das Wälzlager (P1, P'1) der Hauptkammern dadurch zu schmieren, dass in diese eine aus einem Ölbehälter (18) der Turbomaschine stammende Ölmenge eingeleitet wird;
das Wälzlager (Q1) der Sekundärkammer lediglich durch Einleiten eines aus wenigstens einer der Hauptkammern stammenden Ölnebels zu schmieren, wobei der Ölnebel durch Druckdifferenz zwischen den Hauptkammern und der Sekundärkammer befördert wird;
das in die Hauptkammern eingeleitete restliche Schmieröl zurückzugewinnen, um es zu dem Ölbehälter zu befördern; und
das aus der Sekundärkammer stammende Luft/Öl-Gemisch zu einem Ölabscheider (38) zu befördern, um die Luft von dem Öl zu trennen.

2. Verfahren nach Anspruch 1, wobei das Wälzlager (Q1) der Sekundärkammer (12) durch Einleiten eines aus den beiden Hauptkammern (10, 10') stammenden Ölnebels geschmiert wird.

3. Verfahren nach Anspruch 1, wobei das Wälzlager (Q1) der Sekundärkammer (12) durch Einleiten eines lediglich aus einer der beiden Hauptkammern (10, 10') stammenden Ölnebels geschmiert wird.

4. System zur Schmierung einer Turbomaschine, umfassend:
wenigstens drei getrennte Kammern (10, 10', 12), die jeweils wenigstens ein Wälzlager (P1, P'1, Q1) enthalten und jeweils durch Dichtungen (14) verschlossen sind;
Mittel, um eine Druckluftmenge in die Kammern durch die Dichtungen einzuleiten, um sie mit Druck zu beaufschlagen, wobei zwei der Kammern, sogenannte Hauptkammern (10, 10'), mit einem höheren Druck als die verbleibende Kammer, sogenannte Sekundärkammer (12) beaufschlagt werden;
Mittel (16), um auf das Wälzlager (P1, P'1) der Hauptkammern eine aus einem Ölbehälter (18) der Turbomaschine stammende Ölmenge zu spritzen;
eine Einspritzleitung (24), die wenigstens eine der Hauptkammern mit der Sekundärkammer verbindet, um auf das Wälzlager der Sekundärkammer einen aus wenigstens einer der Hauptkammern stammenden Ölnebel zu leiten;
Mittel (32, 32', 34, 34'), um von einem unteren Ausgang (30, 30') der Hauptkammern aus das in diese eingeleitete restliche Schmieröl zurückzugewinnen und um es zu dem Ölbehälter zu befördern; und
Mittel (40), um das aus einem unteren Ausgang (36) der Sekundärkammer stammende Luft/Öl-Gemisch zu einem Ölabscheider (38) zu befördern.

5. System nach Anspruch 4, wobei die Einspritzleitung (24) die beiden Hauptkammern (10, 10') mit der Sekundärkammer (12) verbindet, um auf das Wälzlager (Q1) der Sekundärkammer einen aus den beiden Hauptkammern stammenden Ölnebel zu leiten.

6. System nach Anspruch 4, wobei die Einspritzleitung (24) lediglich eine der beiden Hauptkammern (10') mit der Sekundärkammer verbindet, um auf das Wälzlager der Sekundärkammer einen lediglich aus dieser Hauptkammer stammenden Ölnebel zu spritzen, wobei die andere Hauptkammer (10) über eine Leitung (42) mit dem Ölabscheider (38) verbunden ist.

7. Turbomaschine, die ein Schmierungssystem nach einem der Ansprüche 4 bis 6 umfasst.

## Claims

1. A method of lubricating a turbomachine having at least three distinct enclosures (10, 10', 12) each containing at least one rolling bearing (PI, P'1, Ql), the method being **characterized in that** it consists in:
• pressurizing the enclosures by injecting therein a flow of compressed air through sealing gaskets (14) closing said enclosures, two of said enclosures, referred to as "main" enclosures (10, 10'), being pressurized at a pressure higher than the remaining enclosure, referred to as a "secondary" enclosure (12);
• lubricating the rolling bearings (PI, P'1) of the main enclosures by injecting therein a flow of oil taken from an oil tank (18) of the turbomachine;
• lubricating the rolling bearing (Q1) of the secondary enclosure solely by injecting an oil mist coming from at least one of the main enclosures, said oil mist being conveyed by the pressure difference between the main and secondary enclosures;
• recovering the remainder of the lubricating oil injected into the main enclosures to convey it to the oil tank; and
• conveying the air/oil mixture coming from the secondary enclosure to a de-oiler (38) in order to separate the air and the oil.

2. A method according to claim 1, wherein the rolling bearing (Q1) of the secondary enclosure (12) is lubricated by injecting a mist of oil taken from both main enclosures (10, 10').

3. A method according to claim 1, wherein the rolling bearing (Q1) of the secondary enclosure (12) is lubricated by injecting an oil mist taken solely from one of the two main enclosures (10, 10').

4. A system for lubricating a turbomachine, the System comprising:
• at least three distinct enclosures (10, 10', 12), each containing at least one rolling bearing (PI, P'1, Ql) and each closed by sealing gaskets (14);
• means for introducing a flow of compressed air into the enclosures via the sealing gaskets in order to pressurize the enclosures, two of the enclosures, referred to as "main" enclosures (10, 10'), being pressurized at a pressure higher than the remaining enclosure, referred to as a "secondary" enclosure (12);
• means (16) for injecting a flow of oil against the rolling bearings (PI, P'1) of the main enclosures, the flow of oil being taken from an oil tank (18) of the turbomachine;
• an injection duct (24) Connecting at least one of the main enclosures to the secondary enclosure in order to inject an oil mist against the rolling bearing of the secondary enclosure, the oil mist being taken from at least one of the main enclosures;
• means (32, 32', 34, 34') for recovering from bottom outlets (30, 30') of the main enclosures the remainder of the lubricating oil injected therein in order to convey it to the oil tank; and
• means (40) for conveying the air/oil mixture taken from a bottom outlet (36) of the secondary enclosure to a de-oiler (38).

5. A System according to claim 4, wherein the injection duct (24) connects both main enclosures (10, 10') to the secondary enclosure (12) in order to inject an oil mist against the rolling bearing (Ql) of the secondary enclosure, the oil mist being taken from both main enclosures.

6. A system according to claim 4, wherein the injection duct (24) connects only one of the two main enclosures(10') to the secondary enclosure in order to inject an oil mist against the rolling bearing of the secondary enclosure, the oil mist being taken solely from said main enclosure, the other main enclosure (10) being connected 5 to the de-oiler (38) by a duct (42).

7. A turbomachine including a lubrication System according to any one of claims 4 to 6.
